# EUROPÄISCHE PATENTSCHRIFT

(11) **EP 2 159 248 B1**
(45) Veröffentlichungstag und Bekanntmachung des Hinweises auf die Patenterteilung: **13.03.2013**
(21) Anmeldenummer: 09166425.0
(22) Anmeldetag: 27.07.2009
(51) Int. Cl.: C08G 77/08, C08G 77/12

(54) **Verfahren zur Herstellung verzweigter SiH-funktioneller Polysiloxane und deren Verwendung zur Herstellung flüssiger, SiC- oder SiOC-verknüpfter, verzweigter organomodifizierter Polysiloxane**
Method for manufacturing branched SiH-functional polysiloxanes and their use for producing fluid SIC or SiOC-linked branched organomodified polysiloxanes
Procédé de fabrication de polysiloxanes fonctionnels SiH ramifiés et leur utilisation pour la fabrication de polysiloxanes organomodifiés ramifiés, connexes SiC ou SiOC et liquides

(30) Priorität: 27.08.2008 DE 102008041601
(43) Veröffentlichungstag der Anmeldung: 03.03.2010
(73) Patentinhaber: Evonik Goldschmidt GmbH, 45127 Essen (DE)
(72) Erfinder: Henning, Frauke, Dr., 45130 Essen (DE); Knott, Wilfried, Dr., 45355 Essen (DE); Ferenz, Michael, Dr., 45147 Essen (DE)

(56) Entgegenhaltungen:
- EP-A- 1 829 524
- DE-A1-102005 004 676
- US-A- 5 773 548

## Beschreibung

Die Erfindung betrifft ein Verfahren zur Herstellung von flüssigen, in der Siloxankette verzweigten organomodifizierten Polysiloxanen, bei dem ein verzweigtes Polysiloxan mit endständigen und/oder seitenständigen SiH-Funktionen in nur einem Verfahrensschritt hergestellt und mit organischen Verbindungen weiter funktionalisiert wird, sowie nach diesem Verfahren hergestellte verzweigte organomodifizierte Polysiloxane und deren Verwendung.

### Stand der Technik:

Polyorganosiloxane werden nach dem Stand der Technik durch Hydrolyse und Kondensation ausgehend von gemischt substituierten Methyl-chlor-wasserstoff-silanen hergestellt. Eine direkte hydrolytische Kondensation von wasserstoffhaltigen Silanen, wie z. B. Dimethylmonochlorsilan oder Methyldichlorsilan, wird beispielsweise in der US 2,758,124 beschrieben. Man trennt darin die sich bei der Hydrolyse separierende Siloxanphase von der salzsauren Wasserphase ab. Da dieser Prozess anfällig für Vergelungen der Wasserstoffsiloxane ist, beschreibt die DE 11 25 180 ein verbessertes Verfahren unter Nutzung einer organischen Hilfsphase, bei dem das gebildete Wasserstoffsiloxan in einem organischen Lösungsmittel als separate Phase gelöst vorliegt und nach Abtrennung von der sauren Wasserphase und Abdestillation des Lösungsmittels beständig gegen Vergelung ist. Eine weitere Prozessverbesserung im Hinblick auf einen minimierten Lösungsmitteleinsatz beschreibt die EP 0 967 236 und führt in ihrer Lehre aus, vorerst nur geringe Wassermengen in der hydrolytischen Kondensation der Organochlorsilane einzusetzen, so dass im ersten Schritt Chlorwasserstoff gasförmig ausgetrieben wird und als Wertstoff unmittelbar weiteren Verwendungszwecken zugeführt werden kann.

Verzweigte organomodifizierte Polysiloxane können durch eine Vielzahl an Strukturen beschrieben werden. Generell muss unterschieden werden zwischen einer Verzweigung oder Vernetzung, die über die organischen Substituenten eingebracht wird und einer Verzweigung oder Vernetzung innerhalb der Siliconkette. Organische Vernetzer zur Verknüpfung SiH-Gruppen tragender Siloxangerüste sind beispielsweise α,ω-ungesättigte Diolefine, Divinylverbindungen oder Diallylverbindungen, wie beispielsweise in US 6,730,749 oder EP 0 381 318 beschrieben. Diese der Äquilibrierung nachgeschaltete Vernetzung durch Platin-katalysierte Hydrosilylierung bedeutet einen zusätzlichen Verfahrensschritt, bei dem sowohl intramolekulare Verknüpfungen als auch intermolekulare Verknüpfungen stattfinden können. Die Produkteigenschaften werden zudem stark beeinflusst von den unterschiedlichen Reaktivitäten der zu Peroxidbildung neigenden, niedermolekularen organischen difunktionellen Verbindungen.

Eine multiple Vernetzung des Siliconblocks eines organomodifizierten Polysiloxans mit dem organischen Blockcopolymer kann auf verschiedene Arten erfolgen. Die EP 0 675 151 beschreibt die Herstellung eines Polyethersiloxans durch Hydrosilylierung eines Wasserstoffsiloxans mit einem Unterschuss an hydroxyfunktionellem Allylpolyether, bei der nicht umgesetzte SiH-Funktionen unter Zugabe von Natriummethylat mit den Hydroxylgruppen der Polyethersubstituenten über eine SiOC-Bindung verknüpft werden. Der Molmassenaufbau führt zu einer breiten Streuung der Produkteigenschaften, wie z. B. der Viskosität. Einen ähnlichen Ansatz zum Aufbau verzweigter Systeme beschreibt die US 4,631,208, bei der hydroxyfunktionelle Polyethersiloxane mittels Trialkoxysilanen quervernetzt werden. Beide Methoden führen zu einer intermolekularen Vernetzung der Polyethersiloxane mit sowohl schwierig zu steuerndem Molmassenaufbau als auch damit einhergehenden, unvorhersehbaren Viskositätsanstiegen. Man erhält bei Verfolgung der vorgenannten Methoden keine Verzweigung innerhalb des Siloxanteils bei konstanter Molekularmasse, sondern eine Quervernetzung zu makromolekularen Multiblockcopolymeren.

Eine Verzweigung innerhalb der Siloxankette muss daher bereits bei der Herstellung des Wasserstoffsiloxans erfolgen, um die beschriebenen Nachteile der Quervernetzung zu umgehen. Verzweigungen innerhalb der Siloxankette bedingen den synthetischen Einbau von trifunktionellen Silanen, wie z. B. Trichlorsilanen oder Trialkoxysilanen.

Wie dem Fachmann bekannt ist, steigt die Hydrolysegeschwindigkeit der Organochlorsilane in folgender Reihe (C. Eaborn, Organosilicon Compounds, Butterworths Scientific Publications, London 1960, S. 179)
SiCl₄ > RSiCl₃ >> R₂SiCl₂ > R₃SiCl.

Daher besteht bei den Hydrolyse- und Kondensationsreaktionen von Tetra- und Trichlorsilanen eine erhöhte Tendenz zur Ausbildung hochvernetzter Gele im Vergleich zu den langsamer verlaufenden Hydrolyse- und Kondensationsreaktionen von difunktionellen und monofunktionellen Organochlorsilanen. Die etablierten Verfahren zur Hydrolyse und Kondensation von Dichlor- und Monochlorsilanen sind daher nicht ohne weiteres auf Tetra- und Trichlorsilane übertragbar, sondern es müssen Umwege über Mehrstufenprozesse beschritten werden.

Aufbauend auf diese Erkenntnis, muss auch die Herstellung von einfach verzweigten Wasserstoffsiloxanen durch Einbau von maximal einem trifunktionellen Monomer pro Siloxankette gemäß dem Stand der Technik zweistufig durchgeführt werden. In einem ersten Schritt wird ein trifunktionelles, niedermolekulares Wasserstoffsiloxan durch Hydrolyse und Kondensation aus 1,1,3,3-Tetramethyldisiloxan und Methyltriethoxysilan hergestellt, wie z.B. die DE 37 16 372 lehrt. Erst in einem zweiten Schritt kann dann eine Äquilibrierung mit cyclischen Siloxanen zu höheren Molgewichten erfolgen, wie die DE 10 2005 004676 ausführt. Zur weiteren Umsetzung - und daher erst in einem dritten Schritt - kann das so hergestellte, einfach verzweigte Wasserstoffsiloxan nach den an sich bekannten Methoden zur Funktionalisierung SiH-Gruppen aufweisender Siloxanverbindungen mit organischen Substituenten versehen werden.

Zur Synthese mehrfach verzweigter Wasserstoffsiloxane, die per Definition mehr als ein tetrafunktionelles bzw. trifunktionelles Monomer pro Siloxankette aufweisen, finden sich im Stand der Technik ebenfalls zweistufige Synthesen.

Eine in US 6,790,451 beschriebene Möglichkeit besteht in der Herstellung eines Copolymerisats aus Trichlormethylsilan oder Trialkoxymethylsilan mit Hexamethyldisiloxan oder Trimethylchlorsilan, dort auch MT-Polymer genannt, welches in einem zweiten Schritt gemeinsam mit einem Polydi-methyl(methylhydrogen)siloxancopolymer äquilibriert wird. Die Herstellung solcher MT-Polymere erfordert den Einsatz starker Basen oder starker Säuren teils in Kombination mit hohen Reaktionstemperaturen und bringt Präpolymere derart hoher Viskosität hervor, dass deren Neutralisation beträchtlich erschwert und somit die Weiterverarbeitung zu Endprodukten konstanter Zusammensetzung und Qualität signifikant eingeschränkt ist.

Gemäß EP 0 675 151 wird zuerst die Hydrolyse und Kondensation des SiH-freien, verzweigten Siliconpolymers in Xylol durchgeführt und im zweiten Schritt führt die Äquilibrierung mit Methylhydrogenpolysiloxan zum verzweigten Wasserstoffsiloxan. Auch hier sind zwei Verfahrensschritte zwingend erforderlich, bei denen die SiH-Funktionen erst im zweiten Schritt eingebracht werden.

Die EP 0 610 818 B1 beschreibt ein Verfahren zur Herstellung von SiH-funktionellen Silikonharzen ausgehend von Tetramethyldisiloxan und Tetraalkoxysilanen, die unter Einsatz erheblicher Mengen (beispielsweise 48 Gewichtsprozent des Reaktionsansatzes) einer wässrig-alkoholischen Salzsäurelösung, die mindestens 30 Gewichts-% eines Alkohols und mindestens 5 Gew.-% einer anorganischen Säure aufweist, hydrolysiert und kondensiert werden. Das so erhaltene SiH-funktionelle Silikonharz muss durch Extraktion mit einem organischen Lösungsmittel isoliert werden.

Die EP 1 010 714 B1 beschreibt eine Methode zur Herstellung von verzweigten SiH-funktionellen festen Silikonharzen bei der als Lösungsmittel eine hochsiedende Mischung von Alkanen eingesetzt wird. Zwar sind die verwendeten Mengen an Wasser und sauren Äquilibrierkatalysators geringer als in der EP 0 610 818 B1, dennoch ist ein Abbau der eingesetzten SiH-Funktionen nach dieser Methode nicht zu vermeiden. Wie die dort aufgeführten Beispiele 2 und 3 zeigen, werden während der Reaktion zwischen 10 und 20 Mol-% der eingesetzten Dimethylhydrogensiloxyeinheiten zu nicht SiH-funktionellen Dimethylsiloxyeinheiten abgebaut.

Die EP 1 050 553 A1 beschreibt eine Methode zur Herstellung von verzweigten SiH-funktionellen Vernetzern bei der Methyltriethoxysilan, Tetramethyldihydrogensiloxan und Dimethylhydrogenchlorsilan in Gegenwart von ca. 20 Gewichtsprozent Wasser miteinander reagieren, in dem die bei der Hydrolyse des Chlorsilans freigesetzte Salzsäure als Brönstedt-saurer Äquilibrierkatalysator fungiert. Wie aus dem dort aufgeführten Beispiel 1 offenbar wird, sind weniger als 50% der eingesetzten SiH-Äquivalente im Produkt enthalten.

Gemäß EP 1 829 524 werden mehrfach verzweigte SiH-funktionelle Organopolysiloxane zur Oberflächenbehandlung kosmetischer Pulver eingesetzt. Die dort beschriebenen Organopolysiloxane werden ausgehend von Alkoxysilanen und SiH-funktionellen Siloxanen durch Hydrolyse und Kondensation hergestellt. Als Katalysator werden 5 Gewichtsprozent konzentrierte Schwefelsäure eingesetzt. Die hohe Säuremenge, die bei Verbleib im Produkt zu Lagerinstabilität und Vergelung führen würde, muss nach beendeter Reaktion durch Waschen mit Wasser entfernt werden. Dieser Schritt beinhaltet ebenfalls eine Phasenseparation und führt zum Anfall von zu entsorgendem sauren Abwasser.

Aufgabe der vorliegenden Erfindung war deshalb die Bereitstellung eines einfachen, einstufigen Verfahrens zur Herstellung verzweigter Wasserstoffsiloxane zu finden, ohne die, durch die Ausgangsstoffe eingebrachten, SiH-Funktionen in Nebenreaktionen abzubauen und dabei auf die Verwendung aliphatischer bzw. aromatischer Lösungsmittel zur Bildung einer zusätzlichen Hilfsphase zu verzichten.

Überraschenderweise wurde nun gefunden, dass eine Kondensation und Äquilibrierung SiH-funktioneller Siloxane mit Tetraalkoxysilanen und gegebenenfalls mit Trialkoxysilanen unter hydrolytisch sauren Bedingungen in nur einem Schritt bei weitestgehendem Erhalt an eingebrachten SiH-Funktionen möglich ist. Dieses Ergebnis ist für den Fachmann vollkommen überraschend, da sich weder die beschriebene Vergelungsneigung trifunktioneller Silane noch die Nebenreaktion eines säureinduzierten dehydrogenativen SiH-Abbaues (C. Eaborn, Organosilicon Compounds, Butterworths Scientific Publications, London 1960, S. 200) störend bemerkbar machen.

Gegenstand der vorliegenden Erfindung ist deshalb ein Verfahren gemäß Anspruch 1 zur Herstellung von bei einer Temperatur von 25 °C und einem Druck von 101325 Pa flüssigen, verzweigten SiH-funktionellen Siloxanen, welches dadurch gekennzeichnet ist, dass eine Mischung, enthaltend
a) ein oder mehrere SiH-funktionelle Siloxane,
b) ein oder mehrere SiH-Funktion-freie Siloxane und
c) ein oder mehrere Tetraalkoxysilane, und gegebenenfalls
d) ein oder mehrere Trialkoxysilane
unter Zugabe von Wasser und in Anwesenheit von mindestens einem festen Brönstedt-sauren Katalysator, welcher ausgewählt ist aus den sauren Ionenaustauschern, in einem Verfahrensschritt umgesetzt wird, sowie die so hergestellten Wasserstoffsiloxane.

Ebenfalls Gegenstand der vorliegenden Erfindung ist die Verwendung der so hergestellten Wasserstoffsiloxane zur Herstellung von in der Siloxankette verzweigten organomodifizierten Polysiloxanen sowie die so hergestellten organomodifizierten, in der Siloxankette verzweigten Polysiloxane und deren Verwendung als grenzflächenaktive Silicontenside.

Die erfindungsgemäßen verzweigten, grenzflächenaktiven Silikontenside können in verschiedensten Anwendungen eingesetzt werden, beispielsweise als Polyurethanschaumstabilisatoren, als Entschäumer, Entlüfter, Pigmentnetzmittel oder Dispergieradditiv zur Herstellung von homogenen, lagerstabilen Pasten, Farben, Lacken, Überzügen, Beschichtungen oder Anstrichmitteln. Des weiteren können die erfindungsgemäßen verzweigten Silikontenside Verwendung finden in Silikontrennbeschichtungen und Silikondichtmassen, zur Textilbeschichtung, als Additiv in Reinigungsmitteln wie beispielsweise als Waschmittelzusatz oder als Additiv in wässrigen und nicht-wässrigen Trennmittelformulierungen.

Weitere Gegenstände der Erfindung sind gekennzeichnet durch die nachfolgende Beschreibung und den Inhalt der Ansprüche/Unteransprüche.

Das erfindungsgemäße Verfahren hat den Vorteil, dass verzweigte SiH-funktionelle Siloxane in einem einzigen Verfahrensschritt hergestellt werden können. Das Verfahren hat außerdem den Vorteil, dass bei der Umsetzung die SiH-Funktionen, insbesondere die endständigen SiH-Funktionen nicht oder nur zu einem geringen Anteil verloren gehen. Insbesondere der ausbleibende, vom Fachmann erwartete Abbau der endständigen SiH-Funktionen (Dimethylhydrogensiloxy-Einheiten) ist überraschend.

Das erfindungsgemäße Verfahren hat weiterhin den Vorteil, dass keine Phasentrennung erforderlich ist, bei der einerseits die wässrige Hilfsphase als Abfall zu entsorgen ist und andererseits das Produkt durch Abdestillation der verwendeten unpolaren Lösungsmittel wie beispielsweise Toluol oder Xylol aufgereinigt werden muss. Das erfindungsgemäße Verfahren erfordert im Wesentlichen lediglich eine schonende Abdestillation der niedrig siedenden Reaktionsprodukte, nämlich der Alkohole die aus der Hydrolyse und Kondensation hervorgehen.

Das erfindungsgemäße Verfahren hat hinsichtlich der Qualität und Lagerstabilität der Endprodukte den Vorteil, dass die erfindungsgemäß hergestellten verzweigten Wasserstoffsiloxane und die daraus gefertigten Folgeprodukte keine bzw. kaum Vergelungsneigung besitzen und somit über einen längeren Zeitraum gelagert werden können, ohne dass sich die Viskosität der Produkte maßgeblich verändert.

Das erfindungsgemäße Verfahren zur Herstellung von verzweigten SiH-funktionellen Siloxanen sowie deren Verwendung zur Herstellung von in der Siloxankette verzweigten organomodifizierten Polysiloxanen sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Die verschiedenen Monomereinheiten der in den Formeln angegebenen Verbindungen (Siloxanketten bzw. Polyoxyalkylenkette) können untereinander blockweise aufgebaut sein oder einer statistischen Verteilung unterliegen. Die in den Formeln verwendeten Indices, insbesondere die Indices a, b, c und d sind als statistische Mittelwerte zu betrachten. Unter dem mittleren Verzweigungsgrad k wird im Rahmen der vorliegenden Erfindung das Verhältnis der Anzahl von M- und M^{H}-Einheiten zu T- und Q-Einheiten (M + M^{H})/(T+Q) verstanden. Die Bezeichnung der Einheiten entspricht der international anerkannten Nomenklatur, wie sie z. B. auch in Thieme Römpp Online, Georg Thieme Verlag, 2008 nachzulesen ist. Gemäß dieser Nomenklatur ist M = R₃SiO_{1/2}, D = R₂SiO_{2/2}, T = RSiO_{3/2} und Q = SiO_{4/2}, wobei R organische Reste sind. Mit M^{H} wird eine Einheit bezeichnet, bei der einer der Reste R ein Wasserstoffatom ist. Mit D^{H} wird eine Einheit bezeichnet, bei der einer der Reste R ein Wasserstoffatom ist. Die Bestimmung des Verzweigungsgrads erfolgt durch in Verhältnis setzen der Flächenintegrale der Peaks in einem ²⁹Si-NMR-Spektrum, die den jeweiligen Einheiten zugeordnet sind.

Das erfindungsgemäße Verfahren gemäß Anspruch 1 zur Herstellung von bei einer Temperatur von 25 °C und einem Druck von 101325 Pa flüssigen, verzweigten SiH-funktionellen Siloxanen, zeichnet sich dadurch aus, dass eine Mischung, enthaltend
a) ein oder mehrere SiH-funktionelle Siloxane,
b) ein oder mehrere SiH-Funktion-freie Siloxane und
c) ein oder mehrere Tetraalkoxysilane, und gegebenenfalls
d) ein oder mehrere Trialkoxysilane
unter Zugabe von Wasser und in Anwesenheit von mindestens einem festen Brönstedt-sauren Katalysator, welcher ausgewählt ist aus den sauren Ionenaustauschern, in einem Verfahrensschritt umgesetzt wird, sowie die so hergestellten Wasserstoffsiloxane.

Das erfindungsgemäße Verfahren verzichtet vorzugsweise vollständig auf die Gegenwart von Lösungsmitteln, die mit Wasser in gleichen Gewichtsteilen nicht ohne Phasentrennung mischbar sind. Insbesondere werden in dem erfindungsgemäßen Verfahren keine Alkane oder aromatische Verbindungen als Lösungsmittel eingesetzt.

Es kann vorteilhaft sein, wenn in dem erfindungsgemäßen Verfahren statt Wasser eine Mischung aus Wasser und einem oder mehreren, mit Wasser in gleichen Gewichtsteilen ohne Phasentrennung mischbaren organischen Lösungsmitteln zugegeben wird. Auf diese Weise kann eine bessere Kompatibilisierung und damit bessere Durchmischung des Wassers mit den Siloxanen und Silanen erreicht werden. Eine gute Durchmischung kann aber auch dadurch erreicht werden, dass das Wasser unter einer besonders guten mechanischen Durchmischung zugegeben wird oder der Mischung aus Silanen und Siloxanen in Form von Dampf zugeführt wird, z. B. durch Einperlen von Wasserdampf in die Mischung.

Als mit Wasser in gleichen Gewichtsteilen ohne Phasentrennung mischbare organische Lösungsmittel, werden vorzugsweise Alkohole, insbesondere Alkohole mit 1 bis 6 Kohlenstoffatomen, bevorzugt einwertige Alkohole und besonders bevorzugt Methanol oder Ethanol, insbesondere Ethanol eingesetzt. Vorzugsweise wird eine so große Menge dieses Lösungsmittels zugegeben, dass das Wasser ganz oder teilweise in der Reaktionsmischung homogenisiert ist. Wird eine Mischung von Wasser und einem entsprechenden Lösungsmittel, wie insbesondere Ethanol eingesetzt, beträgt das Gewichtsverhältnis von Wasser zu Lösungsmittel in dieser Mischung vorzugsweise von 1 zu 1 bis 10 zu 1, vorzugsweise 2 zu 1 bis 5 zu 1.

Vorzugsweise werden mit dem erfindungsgemäßen Verfahren in der Siloxankette verzweigte Wasserstoffsiloxane der allgemeinen Formel (I) hergestellt, 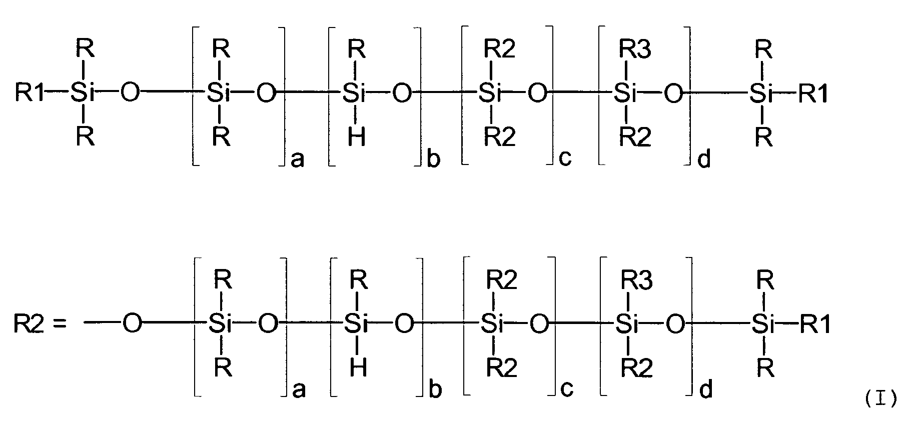 worin
- a: unabhängig voneinander 0 bis 500, vorzugsweise 1 bis 300, bevorzugt 10 bis 200 ist
- b: unabhängig voneinander 0 bis 60, vorzugsweise 0 bis 30, bevorzugt > 0, insbesondere 1 bi 15 ist,
- c: unabhängig voneinander 1 bis 10, vorzugsweise 1 bis 5, ist,
- d: unabhängig voneinander 0 bis 10, vorzugsweise 0 oder > 0 bis 5, bevorzugt 1 bis 5 ist,
- R: mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
- R1: unabhängig voneinander Wasserstoff oder R ist,
- R3: unabhängig voneinander Wasserstoff, R oder ein mit Heteroatomen substituierter, funktioneller, organischer, gesättigter oder ungesättigter Rest, vorzugsweise ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste, besonders bevorzugt ein Methyl-, Chlorpropyl-, Vinyl- oder ein Methacryloxypropyl-Rest ist,
mit der Maßgabe, dass wenn b = 0 ist R1 = H ist und dass die mittlere Anzahl der T- und Q-Einheiten pro Molekül jeweils nicht größer als 20, vorzugsweise nicht größer als 10, bevorzugt nicht größer als 5, die mittlere Anzahl der D-Einheiten pro Molekül nicht größer als 2000, vorzugsweise nicht größer als 1000 und bevorzugt nicht größer als 500 und die mittlere Anzahl der D^{H}-Einheiten pro Molekül nicht größer als 100, vorzugsweise nicht größer als 60 ist. Besonders bevorzugt ist a > 0.

Die mit dem erfindungsgemäßen Verfahren erhaltenen verzweigten SiH-funktionellen Siloxane, vorzugsweise die verzweigten SiH-funktionellen Siloxane der Formel (I) können solche sein, bei denen die SiH-Funktionen rein endständig, rein seitenständig oder gemischt end- und seitenständig im Siloxan angeordnet sind.

Als SiH-funktionelle Siloxane können solche eingesetzt werden, bei denen die SiH-Funktionen rein endständig, rein seitenständig oder gemischt end- und seitenständig im Siloxan angeordnet sind. Als SiH-funktionelle Siloxane können z. B. lineare Polymethylhydrogensiloxane, wie beispielsweise HMS-993 der Firma Gelest Inc., lineare Polydimethylmethylhydrogensiloxane wie beispielsweise HMS-031 und/oder HMS-071 der Firma Gelest Inc., lineare α,ω-Dihydrogenpolydimethylsiloxane, wie beispielsweise 1,1,3,3-Tetramethyldisiloxan und/oder 1,1,3,3,5,5-Hexamethyltrisiloxan, höhermolekulare Oligomere, wie beispielsweise DMS-H03 und/oder DMS-H11 der Firma Gelest Inc., cyclische Polymethylhydrogensiloxane, wie beispielsweise Tetramethylcyclotetrasiloxan oder Pentamethylcyclopentasiloxan und cyclische Polydimethylmethylhydrogensiloxane wie beispielsweise Heptamethylcyclotetrasiloxan und/oder Nonamethylcyclopentasiloxan, oder Mischungen davon eingesetzt werden. Besonders bevorzugt werden als SiH-funktionelle Siloxane 1,1,3,3-Tetramethyldisiloxan, DMS-H03, HMS-993 (jeweils Firma Gelest Inc.) und Pentamethylcyclopentasiloxan eingesetzt.

Als SiH-Funktion-freie Siloxane können z. B. lineare Polydimethylsiloxane, wie beispielsweise Hexamethyldisiloxan oder cyclische Polydimethylsiloxane, wie beispielsweise Octamethylcyclotetrasiloxan und/oder Decamethylcyclopentasiloxan, eingesetzt werden. Vorzugsweise werden Hexamethyldisiloxan und Decamethylcyclopentasiloxan eingesetzt.

In einer bevorzugten Ausführungsform des erfindungsgemäßen Verfahrens werden ein oder mehrere Tetraalkoxysilane und ein oder mehrere Trialkoxysilane eingesetzt. In einer besonders bevorzugten Ausführungsform des erfindungsgemäßen Verfahrens werdern ein oder mehrere Tetraalkoxysilane und keine Trialkoxysilane eingesetzt.

Als Tetraalkoxysilane können prinzipiell alle Tetraalkoxysilane, insbesondere Tetramethoxysilan, Tetraethoxysilan oder Tetraisopropoxysilan oder deren Kondensate eingesetzt werden. Als Tetraalkoxysilane können solche eingesetzt werden, bei denen die Alkoxyreste alle gleich, alle unterschiedlich oder teilweise gleich sind. Besonders bevorzugt ist die Verwendung von Tetraethoxysilan.

Werden zusätzlich Trialkoxysilane eingesetzt, können prinzipiell alle Trialkoxysilane eingesetzt werden. Als Trialkoxysilane können solche eingesetzt werden, bei denen die Alkoxyreste alle gleich, alle unterschiedlich oder teilweise gleich sind. Besonders bevorzugt ist die Verwendung von Triethoxysilanen, vorzugsweise Alkyltriethoxysilane, wie beispielsweise Methyltriethoxysilan, Ethyltriethoxysilan, n-Propyltriethoxysilan, Isobutyltriethoxysilan, Pentyltriethoxysilan, Hexyltriethoxysilan, Octyltriethoxysilan, Hexadecyltriethoxysilan, n-Octadecyltriethoxysilan, halogenhaltige oder pseudohalogenhaltige Alkyltrialkoxysilane, insbesondere Alkyltriethoxysilane, wie beispielsweise Chlorpropyltriethoxysilan, Tridecafluoro-1,1,2,2-tetrahydrooctyl-triethoxysilan, Nonafluoro-1,1,2,2-tetrahydrohexyltriethoxy-silan, 3-Cyanopropyltriethoxysilan, Trialkoxysilane, insbesondere Triethoxysilane mit funktionellen Gruppen, wie beispielsweise 3-Methacryloxypropyltriethoxysilan, 3-Mercaptopropyltriethoxysilan, 5-(Bicycloheptenyl)triethoxysilan, Phenyltriethoxysilan, (p-Chloromethyl)phenyltriethoxysilan, N-(3-Triethoxysilylpropyl)-4,5-dihydroimidazol oder Dihydro-3-[3-(triethoxysilyl)propyl]furan-2,5-dion, eingesetzt werden. Es kann vorteilhaft sein, wenn organisch funktionalisierte Trialkoxysilane als Verzweigungseinheit eingesetzt werden (einäquilibiert werden).

Vorzugsweise werden ausschließlich Edukte a) bis d) eingesetzt, die unter Normalbedingungen als Flüssigkeit vorliegen.

Die Anteile an kettenterminierenden Trialkylsiloxyeinheiten, insbesondere Trimethylsiloxyeinheiten (M-Einheiten) und/oder Dialkylhydrogensiloxyeinheiten, insbesondere Dimethylhydrogensiloxyeinheiten (M^{H}-Einheiten), an kettenverlängernden Dialkylsiloxyeinheiten, insbesondere Dimethylsiloxyeinheiten (D-Einheiten) und/oder Alkylhydrogensiloxyeinheiten, insbesondere Methylhydrogensiloxyeinheiten (D"-Einheiten) sowie an kettenverzweigenden Siloxyeinheiten, (Q-Einheiten) und gegebenen falls an verzweigenden Alkylsiloxyeinheiten (T-Einheiten) und/oder mit funktionellen Gruppen substituierten T-Einheiten können über einen weiten Bereich variiert werden. Das molare Verhältnis der Summe aus M-Einheiten und M^{H}-Einheiten zu Q-Einheiten beträgt vorzugsweise von 4:1 bis 1,8:1. Erhöht man die molare Menge der Q-Einheiten im Verhältnis zu den M- bzw. M^{H}-Einheiten über dieses Grenzverhältnis hinaus, erhält man unerwünschte, makromolekulare stark vernetzte Gele bis Harze.

Die Reaktionsmischung kann durch beliebiges Mischen der Komponenten erhalten werden. Vorzugsweise werden zunächst die SiH-funktionellen Siloxane, die SiH-Funktion-freien Siloxane, die Tetraalkoxysilane und gegebenenfalls die Trialkoxysilane bzw. die substituierten Trialkoxysilane gemischt.

Vorzugsweise wird nach dem Vermischen der Ausgangsstoffe, also der SiH-funktionellen Siloxane, der SiH-Funktion-freien Siloxane und der Tetra- und ggf. Trialkoxysilane, mindestens ein Brönstedt-saurer Katalysator zur Katalyse der Hydrolyse und Kondensation zugegeben. Der Katalysator kann der Reaktionsmischung ganz oder teilweise direkt zugegeben oder während der Reaktion in beliebiger Reihenfolge zudosiert werden.

Vorzugsweise werden zunächst die Ausgangsstoffe vermischt, dann der Katalysator zugegeben und anschließend das Wasser bzw. die wässrige Mischung zugefügt.

Als saure Ionenaustauscher können die nach dem Stand der Technik bekannten Ionenaustauscher eingesetzt werden. In dem erfindungsgemäßen Verfahren können sowohl natürliche Ionenaustauscher, wie beispielsweise Zeolithe, Montmorillonite, Attapulgite, Bentonite und andere Aluminiumsilikate sowie synthetische Ionenaustauscher eingesetzt werden. Letztere sind vorzugsweise Festkörper (meist in Körnerform) mit einer dreidimensionalen, wasserunlöslichen hochmolekularen Matrix auf der Basis von Phenol-Formaldehyd-Harzen oder Copolymerisate aus Styrol-Divinylbenzol, in die zahlreiche "Ankergruppen" unterschiedlicher Acidität eingebaut sind. Insbesondere können saure Tonerden oder saure Ionenaustauscherharze, wie beispielsweise die unter den Markennamen Amberlite^{®}, Amberlyst^{®} oder Dowex^{®} und Lewatit^{®} bekannten Produkte eingesetzt werden. Besonders bevorzugt wird als saurer Ionenaustauscher ein sulfonsaures Ionenaustauscherharz eingesetzt.

Als saure Ionenaustauscher werden in dem erfindungsgemäßen Verfahren vorzugsweise solche eingesetzt, wie sie in EP 1 439 200 beschrieben sind. Diese Schrift und die in ihr als Stand der Technik zitierten Schriften werden hiermit als Referenz eingeführt und gelten als Teil des Offenbarungsgehaltes der vorliegenden Erfindung.

Es kann vorteilhaft sein, wenn in dem erfindungsgemäßen Verfahren als Katalysator mindestens ein fester saurer Ionenaustauscher (Katalysator 1) und mindestens ein weiterer, nicht fester Brönstedt-saurer Katalysator (Katalysator 2), insbesondere eine flüssige Säure eingesetzt wird. Als Katalysator 2 kann dabei eine Mineralsäure, vorzugsweise Schwefelsäure und/oder, vorzugsweise eine organische Sulfonsäure, vorzugsweise Trifluormethansulfonsäure eingesetzt werden. Diese Katalysatormischung wird vorzugsweise direkt der Reaktionsmischung zugegeben. Bevorzugt wird als Katalysator eine Mischung aus Trifluormethansulfonsäure und einem sulfonsauren Ionenaustauscherharz, vorzugsweise Lewatit^{®} K 2621 (Bayer Material Science) eingesetzt. Bevorzugt weist die Katalysatormischung ein Massen-Verhältnis von Katalysator 1 zu Katalysator 2 von 10 zu 1 bis 100 zu 1 auf. Dieses Massenverhältnis ist insbesondere bei der Verwendung eines Lewatit^{®}-Katalysators als Katalysator 1 und von Trifluormethansulfonsäure als Katalysator 2 bevorzugt.

Werden als Katalysator die zwei Katalysatoren 1 und 2 eingesetzt, so kann es vorteilhaft sein, wenn zu der Mischung an Ausgangsstoffen zunächst der Katalysator 2, vorzugsweise vollständig zugegeben wird, anschließend das Wasser zugefügt wird und erst nach der vorzugsweise vollständigen Zugabe von Wasser der Katalysator 1 zugegeben wird. Die Katalysatoren 1 und 2 können aber auch beide vor der Zugabe des Wassers den Ausgangsstoffen zugegeben werden.

In dem erfindungsgemäßen Verfahren wird dem Reaktionsgemisch vorzugsweise soviel an saurem Katalysator zugegeben, dass die Summe der eingesetzten sauren Katalysatoren von 0,01 bis 20 Gew.-%, bevorzugt 0,05 bis 10 Gew.-% bezogen auf die Summe der Masse an eingesetzten Ausgangsstoffen (also Summe der SiH-funktionellen Siloxane, der SiH-Funktion-freien Siloxane, der Tetraalkoxysilane und gegebenenfalls der Trialkoxysilane) beträgt. Je nach Art und Konzentration des eingesetzten Katalysators können bestimmte Unterbereiche dieses Bereichs bevorzugt sein. Besonders bevorzugt ist beispielsweise die Verwendung von Trifluormethansulfonsäure in Mengen von 0,05 Gew.-% bis 0,5 Gew.-%. Wird als Katalysator ein Ionenaustauscherharz allein eingesetzt, so beträgt die eingesetzte Masse an Katalysator vorzugsweise von 3 bis 10 Gew.-%. Wird als Katalysator eine Kombination von Mineralsäure und/oder organischen Sulfonsäure mit einem Ionenaustauscherharz eingesetzt, so beträgt die Masse an eingesetztem Ionenaustauscherharz vorzugsweise von 3 bis 16 Gew.-%.

In dem erfindungsgemäßen Verfahren werden pro Mol eingesetztem Alkoxysilan vorzugsweise von 0,5 bis 30 Mol Wasser eingesetzt. Zur Hydrolyse und Kondensation werden bevorzugt 1 bis 6 Mol Wasser pro Mol Alkoxysilan eingesetzt. Das Wasser kann in einem Schritt zugegeben oder bevorzugt über einen längeren Zeitraum zudosiert werden Aufgrund der gewählten Wassermenge tritt eine Phasentrennung üblicherweise nicht auf.

Die Umsetzung wird im erfindungsgemäßen Verfahren vorzugsweise bei einer Temperatur von 0° C bis 100° C durchgeführt. Vorzugsweise erfolgt die Umsetzung (gleichzeitige Durchführung von Hydrolyse-, Kondensations- und Äquilibrierungsreaktionen) bei einer Temperatur von 20 bis 60 °C.

Nach Beendigung der Reaktion können die flüchtigen Nebenprodukte der Kondensation, z. B. durch schonende Vakuumdestillation entfernt werden. Falls erforderlich oder gewünscht kann eine Neutralisation, z. B. mit einem basischen Salz, vorzugsweise mit Natriumhydrogencarbonat, erfolgen.

Die so erhaltenen erfindungsgemäßen, in der Kette verzweigten Wasserstoffsiloxane sind vorzugsweise stabile, klare, farblose Flüssigkeiten, die bevorzugt keine oder zumindest nur geringe Anteile an flüchtigen niedermolekularen Verbindungen enthalten. Die in den via Eduktgemisch eingewogenen SiH-Äquivalenten, d.h. vor der Umsetzung gemessenen und die in den nach dem erfindungsgemäßen Verfahren hergestellten Wasserstoffsiloxanen (d.h. nach der Umsetzung) gemessenen SiH-Äquivalente sind innerhalb der Analysengenauigkeit übereinstimmend, was den weitestgehenden Erhalt der eingesetzten SiH-Funktionen belegt. Erfindungsgemäße, in der Kette verzweigte Wasserstoffsiloxane weisen vorzugsweise mehr als 95 %, vorzugsweise mehr als 97 % des theoretisch möglichen Wasserstoffgehalts (Si-H-Wasserstoff) auf. Der Wasserstoffgehalt kann gasvolumetrisch bestimmt werden, nachdem der Wasserstoff durch Zersetzung des SiHhaltigen Materials in alkoholischer Alkali-Lösung quantitativ freigesetzt worden ist (siehe auch Reaktionsgleichung im Eaborn S. 200).

Durch das erfindungsgemäße Verfahren können in der Siloxankette verzweigte Wasserstoffsiloxane, insbesondere solche gemäß Formel (I), hergestellt werden. Vorzugsweise weisen die in der Siloxankette verzweigten Wasserstoffsiloxane eine Viskosität, gemessen mit einem Rotationsviskosimeter der Marke Haake RV12 bei 25°C, von 10 bis 1000 mPa*s, bevorzugt von 20 bis 500 und besonders bevorzugt von 20 bis 250 mPa*s, auf. Die verzweigten Wasserstoffsiloxane enthalten im Mittel vorzugsweise 1 bis 10, bevorzugt 1 bis 5 verzweigende Einheiten (Q- und T-Einheiten). Die erfindungsgemäßen, in der Siloxankette verzweigten Wasserstoffsiloxane können zur Herstellung von in der Siloxankette verzweigten organomodifizierten Polysiloxanen verwendet werden.

In einer bevorzugten Ausführungsform des erfindungsgemäßen Verfahrens erfolgt die Herstellung von in der Siloxankette verzweigten organomodifizierten Polysiloxanen durch vollständige oder teilweise Umsetzung der erfindungsgemäß hergestellten in der Siloxankette verzweigten Wasserstoffsiloxane, vorzugsweise Wasserstoffsiloxane der Formel (I) mit Verbindungen, die mindestens eine, vorzugsweise genau eine Doppelbindung pro Molekül aufweisen, durch Edelmetall-katalysierte, insbesondere Platin-katalysierte Hydrosilylierung. Durch diese Umsetzung werden vorzugsweise Copolymere der allgemeinen Formel (II) 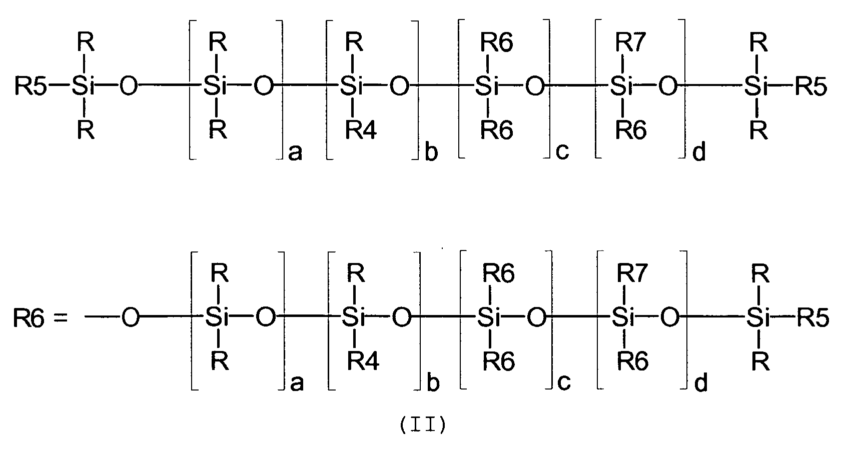 erhalten, worin
- a: unabhängig voneinander 0 bis 500, vorzugsweise 1 bis 300, bevorzugt 10 bis 200 ist
- b: unabhängig voneinander 0 bis 60, vorzugsweise 0 bis 30, bevorzugt > 0, insbesondere 1 bis 15 ist,
- c: unabhängig voneinander 1 bis 10, vorzugsweise 1 bis 5, ist,
- d: unabhängig voneinander 0 bis 10, vorzugsweise 0 oder > 0 bis 5, ist,
mit der Maßgabe, dass die mittlere Anzahl der T- und Q-Einheiten pro Molekül jeweils nicht größer als 20, vorzugsweise nicht größer als 10, die mittlere Anzahl der D-Einheiten pro Molekül nicht größer als 2000, vorzugsweise nicht größer als 1000 und bevorzugt nicht größer als 500 und die mittlere Anzahl der D^{H}-Einheiten pro Molekül nicht größer als 100, vorzugsweise nicht größer als 50 ist,
- R: mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
- R5: unabhängig voneinander R4 oder R ist,
- R4: ein organischer Rest ungleich R oder R, bevorzugt R und/oder
-CH₂-CH₂-CH₂-O-(CH₂-CH₂O-)ₓ-(CH₂-CH(R')O-)_{y}-(SO)_{z}-R''
-CH₂-CH₂-O-(CH₂-CH₂O-)ₓ-(CH₂-CH(R')O-)_{y}-R''
-CH₂-R^{IV}
-CH₂-CH₂-(O)_{x'}-R^{IV}
-CH₂-CH₂-CH₂-O-CH₂-CH(OH)-CH₂OH 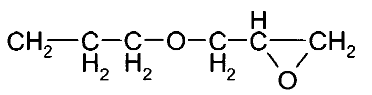 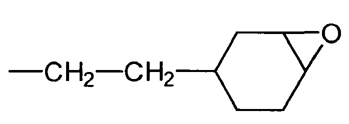 -CH₂-CH₂-CH₂-O-CH₂-C(CH₂OH)₂-CH₂-CH₃
ist, worin
- x: 0 bis 100, vorzugsweise > 0, insbesondere 1 bis 50,
- x': 0 oder 1,
- y: 0 bis 100, vorzugsweise > 0, insbesondere 1 bis 50,
- z: 0 bis 100, vorzugsweise > 0, insbesondere 1 bis 10,
- R': eine gegebenenfalls substituierte, beispielsweise mit Alkylresten, Arylresten oder Halogenalkyl- oder Halogenarylresten substituierte, Alkyl- oder Arylgruppe mit 1 bis 12 C-Atomen ist und
- R'': einen Wasserstoffrest oder eine Alkylgruppe mit 1 bis 4 C-Atomen, eine Gruppe -C(O)-R''' mit R''' = Alkylrest, eine Gruppe -CH₂-O-R', eine Alkylarylgruppe, wie z. B. eine Benzylgruppe, die Gruppe -C(O)NH-R' bedeutet,
- R^{IV}: ein gegebenenfalls substituierter, z. B. mit Halogenen substituierter, Kohlenwasserstoffrest mit 1 bis 50, vorzugsweise 9 bis 45, bevorzugt 13 bis 37 C-Atomen ist,
- SO: ein Styroloxid-Rest -CH(C₆H₅)-CH₂-O- bzw. -CH₂-CH(C₆H₅)-O- ist,
- R7: R, R4 und/oder ein mit Heteroatomen substituierter, funktioneller, organischer, gesättigter oder ungesättigter Rest ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Rest sein kann,
mit der Maßgabe, dass mindestens ein Substituent aus R4, R5 und R7 nicht R ist. Die verschiedenen Monomereinheiten der Siloxankette und auch der Polyoxyalkylenkette können untereinander blockweise aufgebaut sein oder einer statistischen Verteilung unterliegen.

Die edelmetallkatalysierte Hydrosilylierung der erfindungsgemäßen verzweigten Wasserstoffsiloxane kann z. B. wie im Stand der Technik, z. B. in EP 1 520 870, beschrieben durchgeführt werden. Die Schrift EP 1 520 870 wird hiermit als Referenz eingeführt und gilt als Teil des Offenbarungsgehaltes der vorliegenden Erfindung.

Als Verbindungen, die zumindest eine Doppelbindung pro Molekül aufweisen, können z. B. α-Olefine, Vinylpolyoxyalkylene und/oder Allylpolyoxyalkylene eingesetzt werden. Vorzugsweise werden Vinylpolyoxyalkylene und/oder Allylpolyoxyalkylene eingesetzt. Besonders bevorzugte Vinylpolyoxyalkylene sind z. B. Vinylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugte Allylpolyoxyalkylene sind z. B. Allylpolyoxyalkylene mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können und die sowohl hydroxyfunktionell als auch durch eine Methyletherfunktion oder eine Acetoxyfunktion endverkappt sein können. Besonders bevorzugt werden als Verbindungen, die zumindest eine Doppelbindung pro Molekül aufweisen, die in den Beispielen genannten α-Olefine, Allylalkohol, 1-Hexenol, Vinylpolyoxyalkylene und/oder Allylpolyoxyalkylene sowie Allylglycidylether und Vinylcyclohexenoxid eingesetzt.

In einer weiteren bevorzugten Ausführungsform des erfindungsgemäßen Verfahrens erfolgt die Herstellung von in der Siloxankette verzweigten organomodifizierten Polysiloxanen durch vollständige oder teilweise Umsetzung der erfindungsgemäß hergestellten in der Siloxankette verzweigten Wasserstoffsiloxane, vorzugsweise Wasserstoffsiloxane der Formel (I) mit Verbindungen, die eine Hydroxylgruppe pro Molekül aufweisen, durch mit Lewissäuren katalysierte dehydrogenative Verknüpfung. Die Lewis-sauer katalysierte dehydrogenative Verknüpfung von hydroxyfunktionellen Verbindungen an die erfindungsgemäß hergestellten verzweigten Wasserstoffsiloxane, insbesondere solche der Formel (I) kann wie im Stand der Technik beschrieben durchgeführt werden. Vorzugsweise erfolgt die dehydrogenative Verknüpfung wie in DE 10 2005 004 676 beschrieben, welche hiermit als Referenz eingeführt wird und als Teil des Offenbarungsgehaltes der vorliegenden Erfindung gilt.

Durch die dehydrogenative Verknüpfung werden vorzugsweise Copolymere der allgemeinen Formel (III) 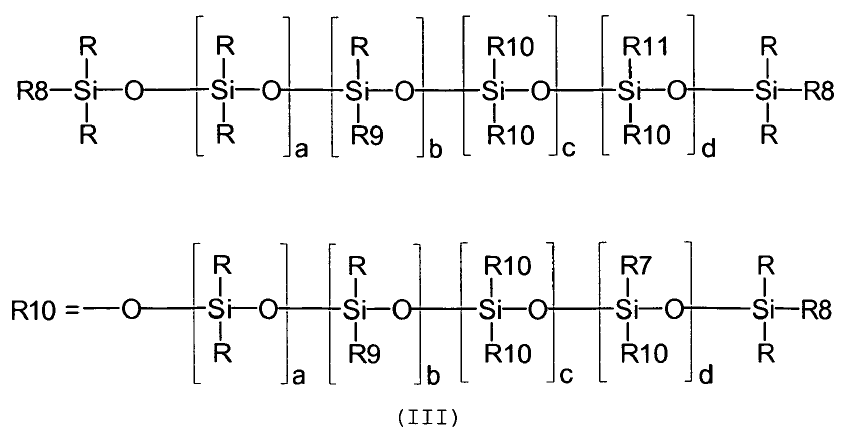 erhalten, worin
- a: unabhängig voneinander 0 bis 500, vorzugsweise 1 bis 300, bevorzugt 10 bis 200 ist
- b: unabhängig voneinander 0 bis 60, vorzugsweise 0 bis 30, bevorzugt >0, insbesondere 1 bis 15 ist,
- c: unabhängig voneinander 1 bis 10, vorzugsweise 1 bis 5, ist,
- d: unabhängig voneinander 1 bis 10, vorzugsweise 0 oder > 0 bis 5, ist,
mit der Maßgabe, dass die mittlere Anzahl der T- und Q-Einheiten pro Molekül jeweils nicht größer als 20, vorzugsweise nicht größer als 10, die mittlere Anzahl der D-Einheiten pro Molekül nicht größer als 2000, vorzugsweise nicht größer als 1000 und bevorzugt nicht größer als 500 und die mittlere Anzahl der D^{H}-Einheiten pro Molekül nicht größer als 100, vorzugsweise nicht größer als 50 ist,
- R: mindestens ein Substituent aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise ein Methylrest ist, wobei besonders bevorzugt alle Reste R ein Methylrest sind,
- R8: eine organische Modifikation oder R, bevorzugt R und/oder O-(CH₂-CH₂O-)ₓ-(CH₂-CH(R')O-)_{y}-(SO)_{z}-R^{v}
wobei x, y, z, R' und SO die für Formel (II) genannten Definitionen haben und
- R9: R^{V} einen linearen, zyklischen oder verzweigten, gesättigten oder ungesättigten, gegebenenfalls mit Heteroatomen substituierten Alkylrest darstellt,
R und/oder R8 sein kann,
- R11: R, R8 und/oder ein mit Heteroatomen substituierter, funktioneller, organischer, gesättigter oder ungesättigter Rest ausgesucht aus der Gruppe der Alkyl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste sein kann,
mit der Maßgabe, dass mindestens einer der Reste R8, R9 und R11 nicht R ist.

Als hydroxyfunktionelle Verbindungen werden vorzugsweise hydroxyfunktionelle Polyoxyalkylene sowie Fettalkohole oder hydroxyfunktionelle Acrylate oder Methacrylate eingesetzt. Besonders bevorzugte Verbindungen sind z. B. Methylpolyoxyalkenole oder Butylpolyoxyalkenole mit einem Molgewicht im Bereich von 100 g/Mol bis 5.000 g/Mol, die aus den Monomeren Propylenoxid, Ethylenoxid, Butylenoxid und/oder Styroloxid blockweise oder statistisch verteilt aufgebaut sein können. Besonders bevorzugt werden als hydroxyfunktionelle Verbindungen die in den Beispielen genannten hydroxyfunktionellen Polyoxyalkylene, sowie Fettalkohole, wie Stearylalkohol, oder hydroxyfunktionelle Acrylate wie Hydroxyethylacrylat oder Hydroxypropylacrylat eingesetzt.

Durch die Verwendung der erfindungsgemäßen, in der Siloxankette verzweigten Wasserstoffsiloxane zur Herstellung von in der Siloxankette verzweigten organomodifizierten Polysiloxane können entsprechende organomodifizierte, in der Siloxankette verzweigte Polysiloxane, insbesondere solche der Formeln (II) oder (III) erhalten werden. Diese erfindungsgemäßen bzw. erfindungsgemäß hergestellten, in der Siloxankette verzweigten, organomodifizierten Polysiloxane können z. B. als grenzflächenaktive Silicontenside und in strahlenhärtenden Silikonbeschichtungen verwendet werden.

Die erfindungsgemäß beanspruchten organo- und insbesondere polyethermodifizierten, verzweigten Siloxane (c + d ≥ 1) können allein bzw. auch in Abmischung mit anderen, unverzweigten organomodifizierten Siloxanen (c + d = 0) als wertvolle grenzflächenaktive Wirkstoffe Eingang in technische Anwendungen finden. Insbesondere gestattet die hier beschriebene Abmischung die Definition eines breiten Wirkspektrums solcher Tenside, die Eingang in die Herstellung von Polyurethanschäumen, z. B. als Schaumstabilisatoren, nehmen.

Es versteht sich von selbst, dass durch das Abmischen der erfindungsgemäß beanspruchten organo- und insbesondere polyethermodifizierten, verzweigten Siloxane (c + d ≥ 1) mit unverzweigten Siloxanen Gemische erhalten werden können, die wertvolle grenzflächenaktive Wirkstoffe sind, die aber, je nach Mischungsverhältnis, in der Summe weniger als eine Verzweigungseinheit pro Molekül (c + d < 1) aufweisen können. Auch ist es selbstverständlich möglich, die erfindungsgemäß beanspruchten organo- und insbesondere polyethermodifizierten, verzweigten Siloxane (c + d ≥ 1) mit Silizium-freien Verbindungen, wie z. B. Lösungsmitteln, insbesondere Glykolen oder Polyethern, in weiten Bereichen zu mischen. Auch solche Mischungen können wertvolle grenzflächenaktive Zusammensetzungen sein. Der per ²⁹Si-NMR bestimmte mittlere molekulare Verzweigungsgrad ändert sich dabei naturgemäß nicht.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Die in den Beispielen angegebenen Viskositäten sind mit einem Rotationsviskosimeter der Marke Haake RV12 bei 25°C ermittelt worden. Die Bestimmung des mittleren Verzweigungsgrads k = (M+M^{H})/(T+Q) erfolgte durch ins Verhältnis setzen der jeweiligen Flächenintegrale eines ²⁹Si-NMR-Spektrums.

### Beispiel 1 (erfindungsgemäß):

16,53 g (0,079 mol) Tetraethoxysilan (>98%, erhältlich bei der Firma Fluka), 80,21 g eines α ,ω-Dihydrogenpolydimethylsiloxans mit einem Wasserstoffgehalt von 2,97 val SiH/kg und 500,4 g Decamethylcyclopentasiloxan (erhältlich bei der Firma Gelest Inc.) wurden in einem Vierhalskolben, ausgestattet mit einem KPG-Rührer, einem Innenthermometer, einem Tropftrichter und einer Destillationsbrücke unter Rühren bei 40 °C vorgelegt, 0,35 ml Trifluormethansulfonsäure (erhältlich bei Sigma Aldrich) wurden zugegeben und es wurde 2 Stunden gerührt. Innerhalb von 5 Minuten wurde unter Rühren eine Mischung aus 5,72 g deionisiertem Wasser und 1,43 g Ethanol zugetropft und eine Stunde gerührt. Nach Zugabe von 37,0 g des vorgetrockneten sulfonsauren Kationenaustauscherharzes Lewatit^{®} K 2621 (10 Gew% Wassergehalt - bestimmt in Anlehnung an die Karl-Fischer-Methode) wurde überschüssiges Wasser und Alkohol im Wasserstrahlpumpenvakuum von ca. 20 mbar eine Stunde bei 40 °C abdestilliert. Nach Abfiltration des Harzes wurde mit 12,0 g Natriumhydrogencarbonat neutralisiert und erneut filtriert. Man erhielt eine klare, farblose Flüssigkeit mit einer Viskosität von 131,9 mPa*s und einem Wasserstoffgehalt von 0,39 val SiH/kg (theoretischer Wert = 0,40 val SiH/kg). Aus dem ²⁹Si-NMR-Spektrum errechnete sich ein mittlerer Verzweigungsgrad k von 4,2.

### Beispiel 2 (erfindungsgemäß):

37,8 g (0,181 mol) Tetraethoxysilan (>98%, erhältlich bei der Firma Fluka), 163,0 g eines α ,ω-Dihydrogenpolydimethylsiloxans mit einem Wasserstoffgehalt von 2,97 val SiH/kg und 492,6 g Decamethylcyclopentasiloxan (erhältlich bei der Firma Gelest Inc.) wurden in einem Vierhalskolben, ausgestattet mit einem KPG-Rührer, einem Innenthermometer, einem Tropftrichter und einer Destillationsbrücke unter Rühren bei 40 °C vorgelegt, 0,42 ml Trifluormethansulfonsäure (erhältlich bei Sigma Aldrich) zugegeben und 2 Stunden gerührt. Innerhalb von 5 Minuten wurde unter Rühren eine Mischung aus 13,1 g deionisiertem Wasser und 3,3 g Ethanol zugetropft und eine Stunde gerührt. Nach Zugabe von 42,4 g des vorgetrockneten sulfonsauren Kationenaustauscherharzes Lewatit^{®} K 2621 (10 Gew% Wassergehalt - bestimmt in Anlehnung an die Karl-Fischer-Methode) wurde überschüssiges Wasser und Alkohol im Wasserstrahlpumpenvakuum von ca. 20 mbar 3,5 Stunden bei 40 °C abdestilliert. Nach Abfiltration des Harzes wurde mit 14,1 g Natriumhydrogencarbonat neutralisiert und erneut filtriert. Man erhielt eine klare, farblose Flüssigkeit mit einer Viskosität von 49,9 mPa*s und einem Wasserstoffgehalt von 0,71 val SiH/kg (theoretischer Wert = 0,72 val SiH/kg). Aus dem ²⁹Si-NMR-Spektrum errechnete sich ein mittlerer Verzweigungsgrad k von 3,6.

### Beispiel 3 (erfindungsgemäß):

25,0 g (0,120 mol) Tetraethoxysilan (>98%, erhältlich bei der Firma Fluka), 21,5 g (0,120 mol) Methyltriethoxysilan (98%, erhältlich bei der Firma ABCR), 161,7 g eines α ,ω-Dihydrogenpolydimethylsiloxans mit einem Wasserstoffgehalt von 2,97 val SiH/kg und 484,2 g Decamethylcyclopentasiloxan (erhältlich bei der Firma Gelest Inc.) wurden in einem Vierhalskolben, ausgestattet mit einem KPG-Rührer, einem Innenthermometer, einem Tropftrichter und einer Destillationsbrücke unter Rühren bei 40 °C vorgelegt, 0,42 ml Trifluormethansulfonsäure (erhältlich bei Sigma Aldrich) zugegeben und 2 Stunden gerührt. Innerhalb von 5 Minuten wurde unter Rühren eine Mischung aus 15,1 g deionisiertem Wasser und 3,8 g Ethanol zugetropft und eine Stunde gerührt. Nach Zugabe von 42,4 g des vorgetrockneten sulfonsauren Kationenaustauscherharzes Lewatit^{®} K 2621 (10 Gew% Wassergehalt - bestimmt in Anlehnung an die Karl-Fischer-Methode) wurde überschüssiges Wasser und Alkohol im Wasserstrahlpumpenvakuum von ca. 20 mbar 3,5 Stunden bei 40 °C abdestilliert. Nach Abfiltration des Harzes wurde mit 14,1 g Natriumhydrogencarbonat neutralisiert und erneut filtriert. Man erhielt eine klare, farblose Flüssigkeit mit einer Viskosität von 62,1 mPa*s und einem Wasserstoffgehalt von 0,71 val SiH/kg (theoretischer Wert = 0,72 val SiH/kg). Aus dem ²⁹Si-NMR-Spektrum errechnete sich ein mittlerer Verzweigungsgrad k von 3,0.

### Beispiel 4 (erfindungsgemäß):

37,6 g (0,180 mol) Tetraethoxysilan (>98%, erhältlich bei der Firma Fluka), 19,5 g Hexamethyldisiloxan (erhältlich bei der Firma Gelest Inc.), 81,1 g eines α ,ω-Dihydrogenpolydimethylsiloxans mit einem Wasserstoffgehalt von 2,97 val SiH/kg und 555,2 g Decamethylcyclopentasiloxan (erhältlich bei der Firma Gelest Inc.) wurden in einem Vierhalskolben, ausgestattet mit einem KPG-Rührer, einem Innenthermometer, einem Tropftrichter und einer Destillationsbrücke unter Rühren bei 40 °C vorgelegt, 0,42 ml Trifluormethansulfonsäure (erhältlich bei Sigma Aldrich) wurden zugegeben und es wurde 2 Stunden gerührt. Innerhalb von 5 Minuten wurde unter Rühren eine Mischung aus 13,0 g deionisiertem Wasser und 3,3 g Ethanol zugetropft und eine Stunde gerührt. Nach Zugabe von 42,4 g des vorgetrockneten sulfonsauren Kationenaustauscherharzes Lewatit^{®} K 2621 (10 Gew% Wassergehalt - bestimmt in Anlehnung an die Karl-Fischer-Methode) wurde überschüssiges Wasser und Alkohol im Wasserstrahlpumpenvakuum von ca. 20 mbar 3,5 Stunden bei 40 °C abdestilliert. Nach Abfiltration des Harzes wurde mit 14,1 g Natriumhydrogencarbonat neutralisiert und erneut filtriert. Man erhielt eine klare, farblose Flüssigkeit mit einer Viskosität von 51,2 mPa*s und einem Wasserstoffgehalt von 0,35 val SiH/kg (theoretischer Wert = 0,36 val SiH/kg). Aus dem ²⁹Si-NMR-Spektrum errechnete sich ein mittlerer Verzweigungsgrad k von 6,8.

### Beispiel 5 (erfindungsgemäß):

37,9 g (0,182 mol) Tetraethoxysilan (>98%, erhältlich bei der Firma Fluka), 41,7 g Hexamethyldisiloxan (erhältlich bei der Firma Gelest Inc. ), 46,5 g eines Polymethylhydrogensiloxans mit einem Wasserstoffgehalt von 15,71 val SiH/kg und 567,3 g Decamethylcyclopentasiloxan (erhältlich bei der Firma Gelest Inc.) wurden in einem Vierhalskolben, ausgestattet mit einem KPG-Rührer, einem Innenthermometer, einem Tropftrichter und einer Destillationsbrücke unter Rühren bei 40 °C vorgelegt, 0,42 ml Trifluormethansulfonsäure (erhältlich bei Sigma Aldrich) zugegeben und 2 Stunden gerührt. Innerhalb von 5 Minuten wurde unter Rühren eine Mischung aus 13,1 g deionisiertem Wasser und 3,3 g Ethanol zugetropft und eine Stunde gerührt. Nach Zugabe von 42,4 g des vorgetrockneten sulfonsauren Kationenaustauscherharzes Lewatit^{®} K 2621 (10 Gew% Wassergehalt - bestimmt in Anlehnung an die Karl-Fischer-Methode) wurde überschüssiges Wasser und Alkohol im Wasserstrahlpumpenvakuum von ca. 20 mbar 3,5 Stunden bei 40 °C abdestilliert. Nach Abfiltration des Harzes wurde mit 14,1 g Natriumhydrogencarbonat neutralisiert und erneut filtriert. Man erhielt eine klare, farblose Flüssigkeit mit einer Viskosität von 51,5 mPa*s und einem Wasserstoffgehalt von 1,09 val SiH/kg (theoretischer Wert = 1,09 val SiH/kg). Aus dem ²⁹Si-NMR-Spektrum errechnete sich ein mittlerer Verzweigungsgrad k von 7,0.

### Beispiel 6 (erfindungsgemäß):

27,6 g teilhydrolysiertes Tetraethoxysilan (*Dynasylan*® 40, 41% SiO₂-Gehalt, erhältlich von der Firma Evonik Degussa GmbH), 169,1 g eines α,ω-Dihydrogenpolydimethylsiloxans mit einem Wasserstoffgehalt von 2,97 val SiH/kg und 511,0 g Decamethylcyclopentasiloxan (erhältlich bei der Firma Gelest Inc.) wurden in einem Vierhalskolben, ausgestattet mit einem KPG-Rührer, einem Innenthermometer, einem Tropftrichter und einer Destillationsbrücke unter Rühren bei 40 °C vorgelegt, 0,42 ml Trifluormethansulfonsäure (erhältlich bei Sigma Aldrich) zugegeben und 2 Stunden gerührt. Innerhalb von 5 Minuten wurde unter Rühren eine Mischung aus 1,4 g deionisiertem Wasser und 0,4 g Ethanol zugetropft und eine Stunde gerührt. Nach Zugabe von 42,4 g des vorgetrockneten sulfonsauren Kationenaustauscherharzes Lewatit^{®} K 2621 (10 Gew% Wassergehalt - bestimmt in Anlehnung an die Karl-Fischer-Methode) wurde überschüssiges Wasser und Alkohol im Wasserstrahlpumpenvakuum von ca. 20 mbar 3,5 Stunden bei 40 °C abdestilliert. Nach Abfiltration des Harzes wurde mit 14,1 g Natriumhydrogencarbonat neutralisiert und erneut filtriert. Man erhielt eine klare, farblose Flüssigkeit mit einer Viskosität von 39,1 mPa*s und einem Wasserstoffgehalt von 0,72 val SiH/kg (theoretischer Wert = 0,72 val SiH/kg).

### Beispiel 7 (erfindungsgemäß)

12,5 g (0,06 mol) Tetraethoxysilan (>98%, erhältlich bei der Firma Fluka), 10,8 g (0,06 mol) Methyltriethoxysilan (98%, erhältlich bei der Firma ABCR), 80,9 g eines α ,ω-Dihydrogenpolydimethylsiloxans mit einem Wasserstoffgehalt von 2,97 val SiH/kg, 242,1 g Decamethylcyclopentasiloxan (erhältlich bei der Firma Gelest Inc.) und 21,2 g des vorgetrockneten sulfonsauren Kationenaustauscherharzes Lewatit^{®} K 2621 (10 Gew% Wassergehalt - bestimmt in Anlehnung an die Karl-Fischer-Methode) wurden in einem Vierhalskolben, ausgestattet mit einem KPG-Rührer, einem Innenthermometer, einem Tropftrichter und einer Destillationsbrücke unter Rühren bei 40 °C 2 Stunden gerührt. Innerhalb von 5 Minuten wurde unter Rühren eine Mischung aus 7,6 g deionisiertem Wasser und 1,9 g Ethanol zugetropft und eine Stunde gerührt. Nach Zugabe von weiteren 7,1 g g des vorgetrockneten sulfonsauren Kationenaustauscherharzes Lewatit^{®} K 2621 wurde überschüssiges Wasser und Alkohol im Wasserstrahlpumpenvakuum von ca. 15 mbar 3, 5 Stunden bei 40 °C abdestilliert. Nach Abfiltration des Harzes erhielt man eine klare, farblose Flüssigkeit mit einer Viskosität von 19,6 mPa*s und einem Wasserstoffgehalt von 0,70 val SiH/kg (theoretischer Wert = 0,71 val SiH/kg).

### Beispiel 8 (erfindungsgemäß)

12,5 g (0,06 mol) Tetraethoxysilan (>98%, erhältlich bei der Firma Fluka), 10,8 g (0,06 mol) Methyltriethoxysilan (98%, erhältlich bei der Firma ABCR), 80,9 g eines α ,ω-Dihydrogenpolydimethylsiloxans mit einem Wasserstoffgehalt von 2,97 val SiH/kg, 242,1 g Decamethylcyclopentasiloxan (erhältlich bei der Firma Gelest Inc.) und 21,2 g des vorgetrockneten sulfonsauren Kationenaustauscherharzes Lewatit^{®} K 2621 (10 Gew% Wassergehalt - bestimmt in Anlehnung an die Karl-Fischer-Methode) wurden in einem Vierhalskolben, ausgestattet mit einem KPG-Rührer, einem Innenthermometer, einem Tropftrichter und einer Destillationsbrücke unter Rühren bei 4 0 °C vorgelegt, 0,42 ml Trifluormethansulfonsäure (erhältlich bei Sigma Aldrich) zugegeben und 2 Stunden gerührt. Innerhalb von 5 Minuten wurde unter Rühren eine Mischung aus 7,6 g deionisiertem Wasser und 1,9 g Ethanol zugetropft und eine Stunde gerührt. Im Wasserstrahlpumpenvakuum von ca. 15 mbar wurde überschüssiges Wasser und Alkohol 3,5 Stunden bei 40 °C abdestilliert. Nach Neutralisation mit 14,1 g Natriumhydrogencarbonat erhielt man eine klare, farblose Flüssigkeit mit einer Viskosität von 67,6 mPa*s und einem Wasserstoffgehalt von 0,70 val SiH/kg (theoretischer Wert = 0,71 val SiH/kg).

### Beispiel 9 (nicht erfindungsgemäß)

49,2 g Octyltriethoxysilan (*Dynasylan*® *OCTEO*, erhältlich bei der Firma Evonik Degussa GmbH), 83,9 g eines α,ω-Dihydrogenpolydimethylsiloxans mit einem Wasserstoffgehalt von 2,97 val SiH/kg und 112,1 g Decamethylcyclopentasiloxan (erhältlich bei der Firma Gelest Inc.) wurden in einem Vierhalskolben, ausgestattet mit einem KPG-Rührer, einem Rückflußkühler und einem Innenthermometer unter Rühren mit 4,8 g deionisiertem Wasser und 7,0 ml konzentrierter Schwefelsäure versetzt und bei 25°C 10 Stunden gerührt. Die Reaktionsmischung wurde zwei Mal mit 83 g deionisiertem Wasser gewaschen, wobei die Phasentrennung im Scheidetrichter jeweils 24 Stunden dauerte. Die erhaltene, trübe Siloxanflüssigkeit wurde im Ölpumpenvakuum von ca. 2 mbar 2 Stunden bei 40°C destilliert. Man erhielt eine klare, farblose Flüssigkeit mit einer Viskosität von 7,4 mPa*s und einem Wasserstoffgehalt von 1,09 val SiH/kg (theoretischer Wert = 1,10 val SiH/kg). Das erhaltene Produkt weist eine Viskosität von deutlich unterhalb der gewünschten Viskosität von 10 mPa*s auf.

### Beispiel 10 (nicht erfindungsgemäß)

34,3 g Methyltriethoxysilan (98%, erhältlich bei der Firma ABCR), 90,1 g eines α,ω-Dihydrogenpolydimethylsiloxans mit einem Wasserstoffgehalt von 2,97 val SiH/kg und 120,5 g Decamethylcyclopentasiloxan (erhältlich bei der Firma Gelest Inc.) wurden in einem Vierhalskolben, ausgestattet mit einem KPG-Rührer, einem Rückflußkühler und einem Innenthermometer unter Rühren mit 5,2 g deionisiertem Wasser und 7,0 ml konzentrierter Schwefelsäure versetzt und bei 25°C 10 Stunden gerührt. Man trennt die schwefelsaure wässrige-ethanolische Phase von der Reaktionsmischung ab und wäscht die Silikonphase **zwei Mal mit 83** g deionisiertem Wasser, wobei die Phasentrennung im Scheidetrichter jeweils 24 Stunden dauerte. Die erhaltene, leicht trübe Siloxanflüssigkeit wurde im Ölpumpenvakuum von ca. 2 mbar 2 Stunden bei 40°C destilliert. Man erhält eine klare, farblose Flüssigkeit mit einer Viskosität von 6,2 mPa*s und einem Wasserstoffgehalt von 1,18 val SiH/kg (theoretischer Wert = 1,20 val SiH/kg). Das erhaltene Produkt weist eine Viskosität von deutlich unterhalb der gewünschten Viskosität von 10 mPa*s auf.

### Beispiel 11 (erfindungsgemäß)

In einem 1000-ml-Vierhalskolben mit angeschlossenem KPG-Rührer, Rückflusskühler und Innenthermometer wurden 48,1 g 1-Dodecen vorgelegt, auf 90 °C geheizt und mit 6 ppm Platin in Form des Karstedt-Katalysators zugesetzt. Anschließend wurden 314 g des gemäß Beispiel 3 hergestellten verzweigten Wasserstoffsiloxans mit dem Wasserstoffgehalt von 0,71 val SiH/kg innerhalb von 40 min zudosiert. Es wurde darauf geachtet, dass die Reaktionstemperatur 100 °C nicht überschritt. Der gasvolumetrisch bestimmte SiH-Umsatz war nach 1 Stunden quantitativ. Anschließend wurden die flüchtigen Bestandteile des Reaktionsgemisches bei 135 °C im Ölpumpenvakuum abdestilliert. Man erhielt eine klare Flüssigkeit mit einer Viskosität von 100 mPa s.

### Beispiel 12 (erfindungsgemäß)

In einem 500-ml-Vierhalskolben mit angeschlossenem KPG-Rührer, Rückflusskühler und Innenthermometer wurden 46 g 1-Dodecen vorgelegt, auf 90 °C geheizt und mit 6 ppm Platin in Form des Karstedt-Katalysators zugesetzt. Anschließend wurden 193 g des gemäß Beispiel 5 hergestellten verzweigten Wasserstoffsiloxans mit dem Wasserstoffgehalt von 1,09 val SiH/kg innerhalb von 25 min zudosiert. Es wurde darauf geachtet, dass die Reaktionstemperatur 100 °C nicht überschritt. Der gasvolumetrisch bestimmte SiH-Umsatz lag nach 3,5 Stunden bei 99,6 %. Anschließend wurden die flüchtigen Bestandteile des Reaktionsgemisches bei 135 °C im Ölpumpenvakuum abdestilliert. Man erhielt eine klare Flüssigkeit mit einer Viskosität von 105 mPa s.

### Beispiel 13 (erfindungsgemäß)

In einem 500-ml-Vierhalskolben mit angeschlossenem KPG-Rührer, Rückflusskühler und Innenthermometer wurden 40 g Dodecanol vorgelegt, auf 100 °C geheizt und mit 23 mg Tris(pentafluorphenyl)-boran versetzt. Anschließend wurden 190 g des gemäß Beispiel 5 hergestellten verzweigten Wasserstoffsiloxans mit dem Wasserstoffgehalt von 1,09 val SiH/kg innerhalb von 2 h zudosiert. Der gasvolumetrisch bestimmte SiH-Umsatz lag nach 3,5 Stunden bei 99,7 %. Anschließend wurden die flüchtigen Bestandteile des Reaktionsgemisches bei 135 °C im Ölpumpenvakuum abdestilliert. Man erhielt eine klare Flüssigkeit mit einer Viskosität von 84 mPa s.

### Beispiel 14 (erfindungsgemäß)

In einem 500-ml-Vierhalskolben mit angeschlossenem KPG-Rührer, Rückflusskühler und Innenthermometer wurden 202 g eines methoxyfunktionellen Allylpolyoxyalkylens mit einem mittleren Molekulargewicht von 1557 g/mol (bestimmt nach Jodzahl), einem Propylenoxidanteil von 18 Gew.% und einem Ethylenoxidanteil von 82 Gew.% zusammen mit 141 g des gemäß Beispiel 2 hergestellten verzweigten Wasserstoffsiloxans mit dem Wasserstoffgehalt von 0,71 val SiH/kg mit vorgelegt, auf 90 °C geheizt und mit 7 ppm Platin in Form Pt 92 zugesetzt. Anschließend wurden auf 115 °C geheizt. Der gasvolumetrisch bestimmte SiH-Umsatz lag nach 2,25 Stunden bei 99,4 %. Man erhielt eine klare Flüssigkeit mit einer Viskosität von 13480 mPa s.

### Beispiel 15 (erfindungsgemäß)

In einem 500-ml-Vierhalskolben mit angeschlossenem KPG-Rührer, Rückflusskühler und Innenthermometer wurden 110 g eines methoxyfunktionellen Allylpolyoxyalkylens mit einem mittleren Molekulargewicht von 999 g/mol (bestimmt nach Jodzahl), einem Propylenoxidanteil von 100 Gew.% zusammen mit 242 g des gemäß Beispiel 4 hergestellten verzweigten Wasserstoffsiloxans mit dem Wasserstoffgehalt von 0,35 val SiH/kg mit vorgelegt, auf 95 °C geheizt und mit 7 ppm Platin in Form Pt 92 zugesetzt. Anschließend wurden auf 110 °C geheizt. Der gasvolumetrisch bestimmte SiH-Umsatz war nach 1 Stunden vollständig. Man erhielt eine klare Flüssigkeit mit einer Viskosität von 132 mPa s.

### Beispiel 16 (nicht erfindungsgemäß)

In einem 500-ml-Vierhalskolben mit angeschlossenem KPG-Rührer, Rückflusskühler und Innenthermometer wurden 30,0 g **des gemäß Beispiel 10** hergestellten verzweigten Wasserstoffsiloxans mit dem Wasserstoffgehalt von 1,20 val SiH/kg, 14,6 g eines methoxyfunktionellen Allylpolyoxyalkylens mit einem mittleren Molekulargewicht **von 875** g/mol (bestimmt nach Jodzahl), einem Propylenoxidanteil von 26 Gew.% und einem Ethylenoxidanteil von 74 Gew.%, 14,3 g eines methoxyfunktionellen Allylpolyoxyalkylens mit einem mittleren Molekulargewicht von 1502 g/mol (bestimmt nach Jodzahl), einem Propylenoxidanteil von 58 Gew.% und einem Ethylenoxidanteil von 42 Gew.% und 83,7 g eines methoxyfunktionellen Allylpolyoxyalkylens mit einem mittleren Molekulargewicht **von 3905** g/mol (bestimmt nach Jodzahl), einem Propylenoxidanteil von 58 Gew.% und einem Ethylenoxidanteil von 42 Gew.% unter Rühren auf 70°C erhitzt. Es wurden 5 ppm Platin in Form eines gemäß EP 1520870 modifizierten Platin(0)-Katalysators mit einer Spritze hinzugegeben. Der gasvolumetrisch bestimmte Umsatz war nach 2,5 Stunden quantitativ. Man erhält eine stark trübe Flüssigkeit mit einer Viskosität von 163 mPa*s.

Die erfindungsgemäßen Beispiele belegen, dass mit dem erfindungsgemäßen Verfahren verzweigte Si-H-funktionelle Siloxane hergestellt werden können, ohne dass wesentliche Anteile der theoretisch zu erwartenden SiH-Funktionen abgebaut werden und ohne dass die Viskosität der erhaltenen verzweigten Wasserstoffsiloxane 10 m*Pas unterschreitet und Trübungen bei Folgeprodukten auftreten, wie dies bei den Vergleichsbeispielen der Fall ist.

## Patentansprüche

1. Verfahren zur Herstellung von bei einer Temperatur von 25 °C und einem Druck von 101325 Pa flüssigen, verzweigten SiH-funktionellen Siloxanen, **dadurch gekennzeichnet, dass** eine Mischung, enthaltend
a) ein oder mehrere SiH-funktionelle Siloxane,
b) ein oder mehrere SiH-Funktion-freie Siloxane und
c) ein oder mehrere Tetraalkoxysilane, und gegebenenfalls
d) ein oder mehrere Trialkoxysilane
unter Zugabe von Wasser und in Anwesenheit von mindestens einem festen, Brönstedt-sauren Katalysator, ausgewählt aus den sauren Ionenaustauschern, in einem Verfahrensschritt umgesetzt wird.

2. Verfahren nach Anspruch 1, **dadurch gekennzeichnet, dass** in der Siloxankette verzweigte Wasserstoffsiloxane der allgemeinen Formel (I) 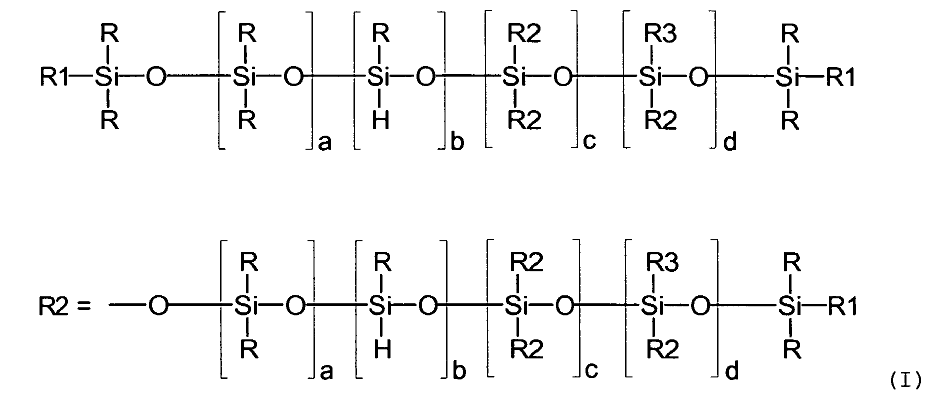 worin
a unabhängig von einander 0 bis 500, vorzugsweise 1 bis 300, bevorzugt 10 bis 200 ist
b unabhängig voneinander 0 bis 60, vorzugsweise 0 bis 30, bevorzugt 0 bis 15 ist,
c unabhängig voneinander 1 bis 10, vorzugsweise 1 bis 5, ist,
d unabhängig voneinander 0 bis 10, vorzugsweise 1 bis 5, ist,
wobei die mittlere Anzahl der T- und Q-Einheiten pro Molekül jeweils nicht größer als 20, die mittlere Anzahl der D-Einheiten pro Molekül nicht größer als 2000 und die mittlere Anzahl der D^{H}-Einheiten pro Molekül nicht größer als 100 ist, und mit der Maßgabe, dass wenn b = 0 ist R1 = H ist.

3. Verfahren gemäß Anspruch 1 oder 2, **dadurch gekennzeichnet, dass** ein oder mehrere Tetraalkoxysilane und ein oder mehrere Trialkoxysilane eingesetzt werden.

4. Verfahren gemäß Anspruch 1 oder 2, **dadurch gekennzeichnet, dass** ein oder mehrere Tetraalkoxysilane und keine Trialkoxysilane eingesetzt werden.

5. Verfahren nach zumindest einem der Ansprüche 1 bis 4, **dadurch gekennzeichnet, dass** die Umsetzung bei einer Temperatur von 0 °C bis 100 °C durchgeführt wird.

6. Verfahren nach zumindest einem der Ansprüche 1 bis 5, **dadurch gekennzeichnet, dass** 0,5 bis 30 Mol Wasser pro Mol Trialkoxysilan eingesetzt werden.

7. Verfahren nach zumindest einem der Ansprüche 1 bis 6, **dadurch gekennzeichnet, dass** als saurer Ionenaustauscher ein sulfonsaures Ionenaustauscherharz eingesetzt wird.

8. Verfahren nach zumindest einem der Ansprüche 1 bis 7, **dadurch gekennzeichnet, dass** neben dem sauren Ionenaustauscher zumindest ein weiterer, nicht fester, Brönstedt-saurer Katalysator eingesetzt wird.

9. Verfahren gemäß mindestens einem der Ansprüche 1 bis 8, **dadurch gekennzeichnet, dass** als Katalysator eine Mischung aus Trifluormethansulfonsäure und sulfonsaurem Ionenaustauscherharz eingesetzt wird.

10. Verfahren gemäß mindestens einem der Ansprüche 1 bis 9, **dadurch gekennzeichnet, dass** die Summe der eingesetzten sauren Katalysatoren von 0,01 bis 20 Gew.-% bezogen auf die Summe der Masse an eingesetzten Ausgangsstoffen beträgt.

11. Verfahren gemäß mindestens einem der Ansprüche 1 bis 10, **dadurch gekennzeichnet, dass** als verzweigte SiH-funktionelle Siloxane solche hergestellt werden, bei denen die SiH-Funktionen rein endständig, rein seitenständig oder gemischt end- und seitenständig im Siloxan angeordnet sind.

12. Verfahren gemäß mindestens einem der Ansprüche 1 bis 11, **dadurch gekennzeichnet, dass** das Wasser in Form eines Gemisches, welches und eines oder mehrere organische, mit Wasser in einem Gewichtsverhältnis von 1 zu 1 ohne Phasentrennung mischbare Lösemittel aufweist, zugegeben wird.

13. In der Siloxankette verzweigte Wasserstoffsiloxane, hergestellt durch ein Verfahren gemäß mindestens einem der Ansprüche 1 bis 12.

14. Wasserstoffsiloxane gemäß Anspruch 13, **dadurch gekennzeichnet, dass** diese eine Viskosität von 10 bis 2000 mPa*s aufweisen.

15. Verwendung der Wasserstoffsiloxane gemäß Anspruch 13 oder 14, zur Herstellung von in der Siloxankette verzweigten organomodifizierten Polysiloxanen.

16. Verwendung gemäß Anspruch 15, **dadurch gekennzeichnet, dass** Wasserstoffsiloxane gemäß Anspruch 13 oder 14 mit Verbindungen, die eine Doppelbindung pro Molekül aufweisen, durch Platin-katalysierte Hydrosilylierung ganz oder teilweise umgesetzt werden.

17. Verwendung gemäß Anspruch 16, **dadurch gekennzeichnet, dass** die Umsetzung mit Vinylpolyoxyalkylenen und/oder oder Allylpolyoxyalkylenen erfolgt.

18. Verwendung gemäß Anspruch 15, **dadurch gekennzeichnet, dass** Wasserstoffsiloxane gemäß Anspruch 13 oder 14 mit Verbindungen, die eine Hydroxylgruppe pro Molekül aufweisen, durch mit Lewissäuren katalysierte dehydrogenative Verknüpfung ganz oder teilweise umgesetzt werden.

19. Organomodifizierte, in der Siloxankette verzweigte Polysiloxane, erhalten durch eine Verwendung gemäß einem der Ansprüche 15 bis 18.

20. Verwendung der Polysiloxane gemäß Anspruch 19 als grenzflächenaktive Silicontenside und in strahlenhärtenden Silikonbeschichtungen, als Polyurethanschaumstabilisatoren, als kosmetische Emulgatoren und Verdickungsmittel, als Entschäumer, Entlüfter, Pigmentnetzmittel oder Dispergieradditiv zur Herstellung von homogenen, lagerstabilen Pasten, Farben, Lacken, Überzügen, Beschichtungen oder Anstrichmitteln, in Silikondichtmassen, zur Textilbeschichtung, als Additiv in Reinigungsmitteln oder als Additiv in wässrigen und nicht-wässrigen Trennmittelformulierungen.

## Claims

1. Process for preparing branched SiH-functional siloxanes liquid at a temperature of 25°C and a pressure of 101 325 Pa, **characterized in that** a mixture comprising
a) one or more SiH-functional siloxanes,
b) one or more SiH function-free siloxanes and
c) one or more tetraalkoxysilanes, and optionally
d) one or more trialkoxysilanes,
with addition of water and in the presence of at least one solid, Brønsted-acidic catalyst selected from the acidic ion exchangers, is converted in one process step.

2. Process according to Claim 1, **characterized in that** hydrosiloxanes branched in the siloxane chain of the general formula (I) 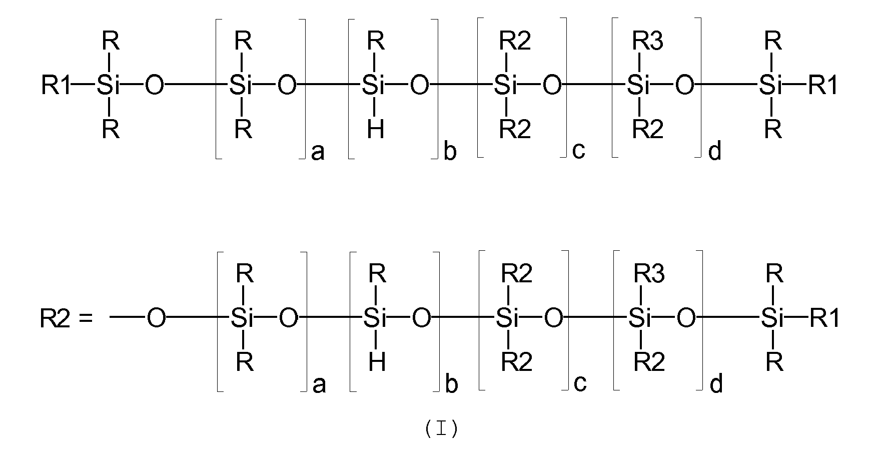 in which
a is independently 0 to 500, preferably 1 to 300, more preferably 10 to 200,
b is independently 0 to 60, preferably 0 to 30, more preferably 0 to 15,
c is independently 1 to 10, preferably 1 to 5,
d is independently 0 to 10, preferably 1 to 5, where the mean number of the T and Q units per molecule is in each case not greater than 20, the mean number of the D units per molecule is not greater than 2000 and the mean number of the D^{H} units per molecule is not greater than 100, and with the proviso that, when b = 0, R1 = H,
are prepared.

3. Process according to Claim 1 or 2, **characterized in that** one or more tetraalkoxysilanes and one or more trialkoxysilanes are used.

4. Process according to Claim 1 or 2, **characterized in that** one or more tetraalkoxysilanes and no trialkoxysilanes are used.

5. Process according to at least one of Claims 1 to 4, **characterized in that** the reaction is performed at a temperature of 0°C to 100°C.

6. Process according to at least one of Claims 1 to 5, **characterized in that** 0.5 to 30 mol of water per mole of trialkoxysilane are used.

7. Process according to at least one of Claims 1 to 6, **characterized in that** the acidic ion exchanger used is a sulphonic acid ion exchange resin.

8. Process according to at least one of Claims 1 to 7, **characterized in that**, as well as the acidic ion exchanger, at least one further, non-solid, Brønsted-acidic catalyst is used.

9. Process according to at least one of Claims 1 to 8, **characterized in that** the catalyst used is a mixture of trifluoromethanesulphonic acid and sulphonic acid ion exchange resin.

10. Process according to at least one of Claims 1 to 9, **characterized in that** the sum total of the acidic catalysts used is from 0.01 to 20% by weight based on the sum total of the mass of starting materials used.

11. Process according to at least one of Claims 1 to 10, **characterized in that** the branched SiH-functional siloxanes prepared are those in which the SiH functions are purely in terminal positions, purely in pendant positions or in a mixture of terminal and pendant positions in the siloxane.

12. Process according to at least one of Claims 1 to 11, **characterized in that** the water is added in the form of a mixture which comprises one or more organic solvents miscible with water in a weight ratio of 1 to 1 without phase separation.

13. Hydrosiloxanes branched in the siloxane chain, prepared by a process according to at least one of Claims 1 to 12.

14. Hydrosiloxanes according to Claim 13, **characterized in that** they have a viscosity of 10 to 2000 mPa*s.

15. Use of the hydrosiloxanes according to Claim 13 or 14 for preparing organomodified polysiloxanes branched in the siloxane chain.

16. Use according to Claim 15, **characterized in that** hydrosiloxanes according to Claim 13 or 14 are reacted fully or partly with compounds having one double bond per molecule by platinum-catalysed hydrosilylation.

17. Use according to Claim 16, **characterized in that** the reaction is effected with vinylpolyoxyalkylenes and/or allylpolyoxyalkylenes.

18. Use according to Claim 15, **characterized in that** hydrosiloxanes according to Claim 13 or 14 are reacted with compounds having one hydroxyl group per molecule by Lewis acid-catalysed dehydrogenative bond formation.

19. Organomodified polysiloxanes branched in the siloxane chain, obtained by use according to one of Claims 15 to 18.

20. Use of the polysiloxanes according to Claim 19 as interface-active silicone surfactants and in radiation-curing silicone coatings, as polyurethane foam stabilizers, as cosmetic emulsifiers and thickeners, as defoamers, devolatilizers, pigment wetting agents or dispersing additives for production of homogeneous, storage-stable pastes, colours, varnishes, coats, coatings or paints, in silicone sealants, for textile coating, as an additive in cleaning compositions or as an additive in aqueous and nonaqueous separating agent formulations.

## Revendications

1. Procédé pour la préparation de siloxanes ramifiés, à fonctionnalité SiH, liquides à une température de 25°C et une pression de 101 325 Pa, **caractérisé en ce qu'**on transforme un mélange, contenant
a) un ou plusieurs siloxanes à fonctionnalité SiH,
b) un ou plusieurs siloxanes exempts de SiH et
c) un ou plusieurs tétraalcoxysilanes et le cas échéant
d) un ou plusieurs trialcoxysilanes
avec addition d'eau et en présence d'au moins un catalyseur solide, acide de Brönstedt, choisi parmi les échangeurs d'ions acides, dans une étape de procédé.

2. Procédé selon la revendication 1, **caractérisé en ce qu'**on prépare des hydrogénosiloxanes ramifiés dans la chaîne siloxane de formule générale (I) 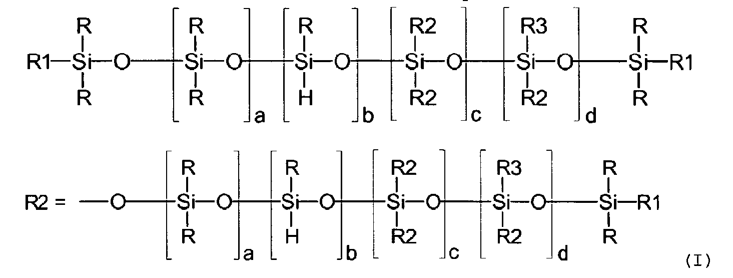 où
a indépendamment l'un de l'autre, vaut 0 à 500, de préférence 1 à 300, de préférence 10 à 200
b indépendamment l'un de l'autre, vaut 0 à 60, de préférence 0 à 30, de préférence 0 à 15
c indépendamment l'un de l'autre, vaut 1 à 10, de préférence 1 à 5
d indépendamment l'un de l'autre, vaut 0 à 10, de préférence 1 à 5
le nombre moyen des unités T et Q par molécule n'est à chaque fois pas supérieur à 20, le nombre moyen des unités D par molécule n'est pas supérieur à 2000 et le nombre moyen des unités D^{H} par molécule n'est pas supérieur à 100, et à condition que lorsque b = 0, R1 = H.

3. Procédé selon la revendication 1 ou 2, **caractérisé en ce qu'**on utilise un ou plusieurs tétraalcoxysilanes et un ou plusieurs trialcoxysilanes.

4. Procédé selon la revendication 1 ou 2, **caractérisé en ce qu'**on utilise un ou plusieurs tétraalcoxysilanes et on n'utilise pas de trialcoxysilanes.

5. Procédé selon au moins l'une quelconque des revendications 1 à 4, **caractérisé en ce que** la transformation est réalisée à une température de 0 à 100°C.

6. Procédé selon au moins l'une quelconque des revendications 1 à 5, **caractérisé en ce qu'**on utilise 0,5 à 30 moles d'eau par mole de trialcoxysilane.

7. Procédé selon au moins l'une quelconque des revendications 1 à 6, **caractérisé en ce qu'**on utilise, comme échangeur d'ions acide, une résine échangeuse d'ions acide sulfurique.

8. Procédé selon au moins l'une quelconque des revendications 1 à 7, **caractérisé en ce qu'**on utilise, outre l'échangeur d'ions acide, au moins un autre catalyseur non solide, acide de Brönstedt.

9. Procédé selon au moins l'une quelconque des revendications 1 à 8, **caractérisé en ce qu'**on utilise comme catalyseur un mélange d'acide trifluorométhanesulfonique et de résine échangeuse d'ions acide sulfonique.

10. Procédé selon au moins l'une quelconque des revendications 1 à 9, **caractérisé en ce que** la somme des catalyseurs acides utilisés est de 0,01 à 20% en poids par rapport à la somme des masses de substances de départ utilisées.

11. Procédé selon au moins l'une quelconque des revendications 1 à 10, **caractérisé en ce qu'**on utilise, comme siloxanes ramifiés à fonctionnalité SiH, des siloxanes dans lesquels les fonctions SiH sont disposées uniquement aux extrémités, uniquement en position latérale ou en positions mixtes, aux extrémités et latéralement, dans le siloxane.

12. Procédé selon au moins l'une quelconque des revendications 1 à 11, **caractérisé en ce que** l'eau est ajoutée sous forme d'un mélange qui contient un ou plusieurs solvants organiques, miscibles à l'eau dans un rapport pondéral de 1:1 sans séparation de phases.

13. Hydrogénosiloxanes ramifiés dans la chaîne siloxane, préparés par un procédé selon au moins l'une quelconque des revendications 1 à 12.

14. Hydrogénosiloxanes selon la revendication 13, **caractérisés en ce qu'**ils présentent une viscosité de 10 à 2000 mPa·s.

15. Utilisation des hydrogénosiloxanes selon la revendication 13 ou 14, pour la préparation de polysiloxanes organomodifiés, ramifiés dans la chaîne siloxane.

16. Utilisation selon la revendication 15, **caractérisée en ce que** les hydrogénosiloxanes selon la revendication 13 ou 14 sont transformés totalement ou partiellement avec des composés qui présentent une double liaison par molécule, par hydrosilylation catalysée par du platine.

17. Utilisation selon la revendication 16, **caractérisée en ce que** la transformation est réalisée avec des vinylpolyoxyalkylènes et/ou ou des allylpolyoxyalkylènes.

18. Utilisation selon la revendication 15, **caractérisée en ce que** les hydrogénosiloxanes selon la revendication 13 ou 14 sont transformés totalement ou partiellement avec des composés qui présentent un groupe hydroxyle par molécule, par liaison avec hydrogénation, catalysée par des acides de Lewis.

19. Polysiloxanes ramifiés dans la chaîne siloxane, organomodifiés, obtenus par une utilisation selon l'une quelconque des revendications 15 à 18.

20. Utilisation des polysiloxanes selon la revendication 19 comme agents tensioactifs siliconés à activité interfaciale et dans des revêtements de silicone durcissables par un rayonnement, comme stabilisateurs de mousse de polyuréthane, comme émulsifiants et épaississants cosmétiques, comme antimousses, agents de désaération, mouillants de pigments ou additif de dispersion pour la préparation de pâtes, encres, laques, recouvrements, revêtements ou peintures homogènes, stables à l'entreposage, dans des masses d'étanchéité siliconées, pour le revêtement de textiles, comme additif dans les agents de nettoyage ou comme additif dans des formulations aqueuses et non aqueuses d'agent de démoulage.
